(19) Europäisches Patentamt
European Patent Office
Office européen des brevets

(11) Veröffentlichungsnummer: **0 162 245**
**A1**

(12) # EUROPÄISCHE PATENTANMELDUNG

(21) Anmeldenummer: 85103949.5

(22) Anmeldetag: 02.04.85

(51) Int. Cl.⁴: C 08 L 83/10
C 08 L 69/00

(30) Priorität: 14.04.84 DE 3414116

(43) Veröffentlichungstag der Anmeldung: 27.11.85 Patentblatt 85/48

(84) Benannte Vertragsstaaten: DE FR GB IT NL

(71) Anmelder: BAYER AG
Konzernverwaltung RP Patentabteilung
D-5090 Leverkusen 1 Bayerwerk(DE)

(72) Erfinder: Paul, Winfried, Dr.
Bethelstrasse 22
D-4150 Krefeld 1(DE)

(72) Erfinder: Löwer, Hartmut, Dr.
Tizianweg 4
D-4010 Hilden(DE)

(72) Erfinder: Müller, Peter-Rolf, Dr.
Paul-Klee-Strasse 76
D-5090 Leverkusen 1(DE)

(72) Erfinder: Witman, Mark William, Dr.
1856 Taper Drive
Pittsburgh Pennsylvania 15249(US)

(72) Erfinder: Storp, Siegfried, Dr.
Leopold-Gmelin-Strasse 17
D-5000 Koeln 80(DE)

(54) **UV-stabilisierte Polycarbonatformkörper.**

(57) Gegenstand der vorliegenden Erfindung sind dünnwandige UV-stabilisierte Polycarbonatformkörper, insbesondere Stegmehrfachplatten und Filme, aus Polydiorganosiloxan-Polycarbonat-Blockcopolymeren.

BAYER AKTIENGESELLSCHAFT
Konzernverwaltung RP
Patentabteilung

5090 Leverkusen, Bayerwerk

PS/ABc

# UV-stabilisierte Polycarbonatformkörper

Gegenstand der vorliegenden Erfindung sind UV-stabilisierte Polycarbonatformkörper einer Dicke von 0,01 mm bis 1,2 mm aus thermoplastischen Polydiorganosiloxan-Polycarbonat-Blockcopolymeren mit einem mittleren Gewichtsmittelmolekulargewicht ($\bar{M}_w$, gemessen beispielsweise durch Ultrazentrifugation oder Streulichtmessung) von 10 000 bis 200 000, vorzugsweise von 20 000 bis 100 000, bestehend aus

A) 85 Gew.-% bis 99,5 Gew.-%, vorzugsweise aus 90 Gew.-% bis 99,5 Gew.-%, bezogen auf A) + B), an aromatischen Carbonatstruktureinheiten (I)

$$-[O-D-O-\underset{\underset{O}{\|}}{C}]- \qquad (I)$$

worin -O-D-O- ein Diphenolatrest mit vorzugsweise 6 bis 30 C-Atomen ist, und

B) 15 Gew.-% bis 0,5 Gew.-%, vorzugsweise 10 Gew.-% bis 0,5 Gew.-%, bezogen auf A) + B) an Polydiorganosiloxanstruktureinheiten (II)

$$-[O-D-O-(\underset{R}{\overset{R}{Si}}-O)_n-D-O-\underset{O}{\overset{\|}{C}}-]- \qquad (II),$$

worin die R's gleich oder verschieden sind und lineares $C_1$-$C_{20}$-Alkyl, verzweigtes $C_3$-$C_{20}$-Alkyl, halogeniertes lineares $C_1$-$C_{20}$-Alkyl, halogeniertes, verzweigtes $C_3$-$C_{20}$-Alkyl, $C_6$-$C_{20}$-Aryl und halogeniertes $C_6$-$C_{20}$-Aryl, vorzugsweise jedoch $CH_3$ sind, n eine ganze Zahl zwischen 5 und 100, vorzugsweise zwischen 20 und 80 ist, und D die Bedeutung von Struktureinheit (I) hat, und

C) Struktureinheiten von Kettenabbrechern und gegebenenfalls Verzweigern,

die dadurch gekennzeichnet sind, daß sie einen UV-Absorber, vorzugsweise in Mengen von 0,05 Gew.-% bis 1,0 Gew.-%, und insbesondere in Mengen von 0,1 Gew.-% bis 0,5 Gew.-%, bezogen auf Gewichtssumme aus Blockcopolymer und UV-Absorber, enthalten.

Erfindungsgemäß bevorzugte Polycarbonatformkörper sind Hohlkammerplatten oder Stegmehrfachplatten einer Gurtdicke von 0,3 mm bis 1,2 mm

und einer Stegdicke von 0,3 mm bis 1,2 mm. Bei Stegabständen zwischen 5 mm und 16 mm und Plattendicken zwischen 2 mm und 40 mm sind Länge und Breite der Platte beliebig. Beispiele für Polycarbonat-Stegmehrfachplatten sind Platten einer Breite von 2 m und einer Länge von 10 m.

Erfindungsgemäß bevorzugte Polycarbonatformkörper sind außerdem Folien einer Dicke von 0,01 mm bis 0,3 mm, vorzugsweise 0,05 mm bis 0,1 mm.

Polydiorganosiloxan-Polycarbonat-Blockcopolymere sind bekannt (siehe beispielsweise US-Patente 3 189 662, 3 821325, 3 832 419 und 3 679 774).

Sie finden Verwendung als Beschichtungen, als Isolierstoffe, als Überzüge, als Bindematerialien und in Klebstoffen.

Gemäß US-Patent 3 419 634 bekannte Polydiorganosiloxan-Polycarbonat-Blockcopolymere mit ungesättigten Endgruppen, welche ausgehärtet werden können, und welche Füllstoffe enthalten können, können u.a. als Überzüge, Autofenster, Bindemittel für Sicherheitsglas und Dichtungen für Glas verwendet werden.

Gemäß WO 80/00084 können UV-Absorber in Mischungen aus hochmolekularem aromatischem Polycarbonat mit bis zu 50 Gewichtsprozent eines Blockcopolymers verwendet werden, welches aus alternierenden Segmenten aromatischen Polycarbonats und Polysiloxans im Gewichtsverhältnis von 25:75 bis 75:25 besteht.

Die Mischungen zeichnen sich durch erhöhte Duktilität, Lösungsmittelbeständigkeit und verbessertes Brandverhalten aus. Es werden Prüfkörper und Platten, einer Dicke größer/gleich 1,6 mm beschrieben.

Zur Herstellung der erfindungsgemäßen UV-Absorber-haltigen Polydiorganosiloxan-Polycarbonat-Blockcopolymer-Formkörper erfolgt vorab das Vermischen der Polydiorganosiloxan-Polycarbonat-Blockcopolymeren in Substanz auf einem Compoundieraggragat oder indem man Lösungen des Blockcopolymers und des UV-Absorbers vermischt und anschließend das Lösungsmittel in üblicher Weise abzieht, indem man beispielsweise die Lösung über einen Ausdampfextruder aufarbeitet. Die erhaltenen Mischungen von Polydiorganosiloxan-Polycarbonat-Blockcopolymeren mit UV-Absorbern werden dann in bekannter Weise zu den erfindungsgemäßen Platten oder zu den erfindungsgemäßen Filmen extrudiert oder zu den erfindungsgemäßen Filmen vergossen. Das Vergießen zu den erfindungsgemäßen Filmen kann auch bereits aus dem Gemisch der Lösungen erfolgen, ohne daß die UV-Absorber-haltigen Blockcopolymeren vorab isoliert werden.

Es zeigte sich nun überraschenderweise, daß sich der Gehalt an UV-Absorber an der Oberfläche der erfindungsgemäßen Formkörper konzentriert. Dies ist bei anderen Thermoplasten, insbesondere bei anderen thermoplastischen Polycarbonaten nicht der Fall, vielmehr sind dazu be-

sondere Applikationsverfahren erforderlich. (Siehe beispielsweise US-Patente 3 043 709, 3 049 443, 3 309 219, 3 309 220, 3 617 330, 3 892 889 und 3 582 398 sowie die deutsche Offenlegungsschrift 1 694 273).

Gerade die erfindungsgemäß bevorzugten dünnwandigen Formkörper wie Stegmehrfachplatten und Folien bedürfen in besonderem Maß eines wirksamen, d.h. an der Formkörperoberfläche konzentrierten UV-Schutzes.

Gegenüber den bekannten Applikationsverfahren wie Anquellen der Oberfläche mit einer hochkonzentrierten Lösung eines UV-Absorbers, Lackierung mit einem speziellen UV-Absorber-haltigen Schutzlack oder der Coextrusion einer UV-Absorber-reichen Deckschicht besitzt die erfindungsgemäße Einbringung des UV-Absorbers den Vorteil des geringsten Aufwandes. Sie erfordert weder einen zusätzlichen Verarbeitungsschritt noch ist eine Schädigung der dünnwandigen Formkörper durch Lösemitteleinfluß oder Temperung zu befürchten, noch ergeben sich Kalibrierungsprobleme (wie bei der Coextrusion).
Mittels ESCA (=Electron Spectroscopy for Chemical Analyses) läßt sich die Anreicherung der UV-Absorber in der Oberfläche der erfindungsgemäßen Formkörper aus Polydiorganosiloxan-Polycarbonat-Blockcopolymeren nachweisen, welche ein Vielfaches der durchschnittlichen Volumenkonzentration ausmacht.

Diphenole HO-D-OH (III) für die Carbonatstruktureinheiten der Formel (I) sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-sulfoxide, Bis-(hydroxyphenyl)-sulfone und α, α' -Bis-(hydroxyphenyl)-diisopropylbenzole sowie deren kernalkylierte und kernhalogenierte Verbindungen. Diese und weitere geeignete Diphenole sind literaturbekannt (siehe beispielsweise US-PS 3 028 365, DE-OS 2 063 050 und DE-OS 2 211 957).

Bevorzugte Diphenole sind beispielsweise 2,2-Bis-(4-hydroxyphenyl)-propan, 1,1-Bis-(4-hydroxyphenyl)-cyclohexan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan und Bis-(4-hydroxyphenyl)-sulfid.

Die Diphenole können sowohl allein als auch als Mischungen eingesetzt werden.

Struktureinheiten von Kettenabbrechern sind einwertige Reste, die sich beispielsweise von Monophenolen oder beispielsweise von einbasigen Carbonsäuren ableiten, also einbindige Reste der Formel IVa oder IVb

$$E-O- \qquad\qquad E-\underset{\underset{O}{\|}}{C}-$$

(IVa) (IVb)

worin E ein aromatischer, carbocyclischer Rest ist.

Der Rest E kann noch durch Alkyl oder durch Halogen substituiert sein.

Geeignete monophenolische Kettenabbrecher sind beispielsweise Phenol selbst, sowie p-tert.-Butylphenol, p-Chlorphenol, 2,4,6-Tribromphenol und die verschiedenen Kresole.

Ein geeigneter Carbonsäurekettenabbrecher ist beispielsweise Benzoylchlorid.

Der Gehalt an Kettenabbrecherstruktureinheiten liegt zwischen 0,5 Mol bis 10 Mol-%, bezogen auf die Molsumme an Struktureinheiten aus (I) und (II).

Struktureinheiten von Verzweigern sind dreibindige oder mehr als dreibindige, vorzugsweise dreibindige oder vierbindige Reste, wie sie durch den Einbau von tri- oder mehr als trifunktionellen, vorzugsweise von trifunktionellen oder tetrafunktionellen Verzweigern bei der Synthese der Blockcopolymeren entstehen. Geeignete Verzweiger mit drei= oder mehr als dreifunktionellen Gruppen sind insbesondere solche mit drei oder mehr als drei phenolischen OH-Gruppen.

Verwendbare Verzweiger mit drei oder mehr als drei phenolischen Hydroxylgruppen sind beispielsweise 2,4-Bis-(4-hydroxyphenyl-isopropyl)-phenol, 2,6-Bis-(2'-hydroxy-5'-methyl-benzyl)-4-methylphenol, 2-(4-hydroxyphenyl)-2-(2,4-Dihydroxyphenyl)-propan und 1,4-Bis-(4,4'-dihydroxytriphenyl-methyl)-benzol. Verzweiger mit sonstigen funktionellen Gruppen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Der Gehalt an Verzweigerstruktureinheiten liegt zwischen 0,05 und 2 Mol-%, bezogen auf die Molsumme an Struktureinheiten aus (I) und (II).

Polydiorganosiloxane

$$HO-D-O-(\underset{R}{\overset{R}{Si}}-O)_n-D-OH \qquad (V)$$

für die Polydiorganosiloxanstruktureinheiten der Formel (II) sind aus der US-Patentschrift 3 419 634 bekannt und können beispielsweise aus den entsprechenden Bischlorverbindungen (VI)

$$Cl-(\underset{R}{\overset{R}{Si}}-O)_{n-1}-\underset{R}{\overset{R}{Si}}-Cl \qquad (VI)$$

und den Diphenolen (III) beispielsweise gemäß US-Patent 3 419 634, Spalte 3 in Kombination mit US-Patent 3 189 662 erhalten werden.

In den Formeln (V) und (VI) haben R, D und n die Bedeutung gemäß Formel (II).

Halogenierte Reste R in den Formeln (II), (V) und (VI) bedeutet teilweise oder vollständig chloriert, bromiert oder fluoriert.

Beispiele für geeignete Reste R in den Formeln (II), (V) und (VI) sind außer dem bereits erwähnten Methyl noch Ethyl, Propyl, n-Butyl, tert.-Butyl, Phenyl, Naphthyl, Chlormethyl, Perfluorbutyl, Perfluoroctyl und Chlorphenyl.

Die Herstellung der erfindungsgemäß zu verwendenden Polydiorganosiloxan-Polycarbonat-Blockcopolymeren kann beispielsweise nach den Bedingungen des Phasengrenzflächenpolycarbonatherstellungsverfahrens aus den Polydiorganosiloxanen (V), den Diphenolen (III) und Kettenabbrechern und gegebenenfalls Verzweigern mit Phosgen, wäßrigem Alkali und Aminkatalysatoren erfolgen.

Das Phasengrenzflächenverfahren zur Herstellung aromatischer Polycarbonate ist bekannt (siehe beispielsweise H. Schnell, Chemistry and Physics of Polycarbonates, Polymer Rev., Vol. IX, 1964, Seite 33 ff, Interscience Publishers New York, DE-OS 1 570 533 und US-Reissue-Patent 27 682) und speziell auch für die Herstellung von Polydiorganosiloxan-Polycarbonat-Blockcopolymeren (siehe beispielsweise US-Patent 3 821 325).

Das jeweils einzusetzende Gewichtsverhältnis von Diphenolen (III) zu Polydiorganosiloxanen (V) richtet sich

nach dem angestrebten Gewichtsverhältnis im herzustellenden Blockcopolymeren, wobei quantitativer Umsatz der Komponenten (III) und (V) zu unterstellen ist. Die Menge an einzusetzendem Kettenabbrecher richtet sich nach dem einzustellenden Molekulargewicht des Blockcopolymeren und darüber hinaus danach, ob Verzweiger miteingesetzt werden.

Die Menge an Kettenabbrecher liegt somit zwischen 0,5 Mol-% und 10 Mol-%, bezogen auf Mole an Komponenten (III) + (V), die Menge an eventuell mitzuverwendenden Verzweigern zwischen 0,05 und 2 Mol-%, bezogen auf Mole an Komponenten (III) + (V).

Die Mengen an Phosgen, Aminkatalysator, wäßriger alkalischer Phase und organischer Phase liegen im üblichen Bereich der Polycarbonatherstellung nach dem Phasengrenzflächenverfahren.

Geeignete Aminkatalysatoren sind beispielsweise Triethylamin oder N-Ethyl-piperidin; als alkalische Phase wird Natronlauge bevorzugt; als organische Phase Dichlormethan oder Chlorbenzol oder eine Mischung aus beiden eingesetzt.

Anstelle der erfindungsgemäß zu verwendenden Polydiorganosiloxan-Polycarbonat-Blockcopolymeren mit einem Gehalt von 15 Gew.-% bis 0,5 Gew.-% an Polysiloxanstruktureinheiten (II) können auch Gemische von Polydiorganosiloxan-Polycarbonat-Blockcopolymeren mit anderen thermoplastischen, aromatischen Polycarbonaten mit $\bar{M}_w$ von

0162245

10.000 bis 100.000 auf Basis der Diphenole (III) eingesetzt werden, wobei als Blockcopolymere dazu auch solche geeignet sind, deren Gehalt an Polysiloxanstruktureinheiten (II) über 15 Gew.-% bis etwa 60 Gew.-% liegen, vorausgesetzt, daß das resultierende Gemisch mit den anderen thermoplastischen, aromatischen Polycarbonaten wiederum die erfindungsgemäß vorgelegten 15 Gew.-% bis 0,5 Gew.-% an Polysiloxanstruktureinheiten (II) enthält.

Als erfindungsgemäß einsetzbare UV-Absorber sind alle diejenigen geeignet, die bislang zur UV-Stabilisierung von thermoplastischen, aromatischen Polycarbonaten geeignet sind, also beispielsweise diejenigen, die in den US-Patenten 3 309 219, 3 309 220, 3 617 330 und 3 892 889 genannt sind.

Bevorzugte UV-Absorber sind Benzophenone und Benztriazole.

Beispiele für geeignete UV-Absorber sind 2-Hydroxy-4-methoxybenzophenon, 2-Hydroxy-4-methoxy-2'-carboxybenzophenon, 2,4-Dihydroxybenzophenon, 2,2'-Dihydroxy-4-methoxybenzophenon, 2,2'-Dihydroxybenzophenon, 2,2',4,4'-Tetrahydroxybenzophenon, 2,2'-Dihydroxy-4,4'-dimethoxy-benzophenon, 2,2'-Dihydroxy-4,4'-diethoxybenzophenon, 2,2'-Dihydroxy-4,4'-dipropoxybenzophenon, 2,2'-Dihydroxy-4,4'-dibutoxybenzophenon, 2,2'-Dihydroxy-4-methoxy-4'-ethoxybenzophenon, 2,2'-Dihydroxy-4-methoxy-4'-propoxybenzophenon, 2,2'-Dihydroxy-4-methoxy-4'-butoxybenzophenon, 2-(2'-Hydroxy-5'-methylphenyl)-2H-benzotriazol, 2-(2'-Hydroxy-5'-tert.-butylphenyl)-2H-benzotriazol, 2-(2'-Hydroxy-3'-methyl-5'-tert.-butylphenyl)-2H-benzotriazol, 2-(2'-hydroxy-5'-cyclohexylphenyl)-2H-benzotriazol und 2(2'-Hydroxy-3',5'-dimethylphenyl)-2H-benzotriazol.

Die insbesondere verwendbaren UV-Absorber sind 2(2'-Hydroxy-5'-isooctylphenyl)-2H-benzotriazol, 2-(2'-Hydroxy-3'-tert.-butyl-5'-sec.-butylphenyl)-2H-benzotriazol und 2-(2'-Hydroxy-3',5'-dimethylphenyl)-2H -benzotriazol.

Zusammen mit den erfindungsgemäß zuzusetzenden UV-Absorbern können den Polydiorganosiloxan-Polycarbonat-Blockcopolymeren noch die für thermoplastische Polycarbonate üblichen Additive wie Verstärkerstoffe, Gleitmittel, Antistatika, Flammschutzmittel oder Pigmente zugesetzt werden.

Stegmehrfach-platten im Sinne der vorliegenden Erfindung sind alle Arten von Hohlkammerplatten, also auch beispielsweise Hohlkammerplatten gemäß EP-OS 0 054 856. Die Hohlkammerplatten oder Stegmehrfachplatten sollen eine Gurtdicke bzw. Stegdicke von 0,3 mm bis 1,2 mm haben. Die Herstellung dieser Platten aus dem erfindungsgemäß zu verwendenden UV-Absorber-haltigen Blockcopolymeren erfolgt in bekannter Weise.

Polycarbonatfolien im Sinne der vorliegenden Erfindung sind alle Arten von Folien, insbesondere Extrusions-und Gießfolien. Diese können als solche hergestellt, aber auch sogleich als Beschichtungen für andere Thermoplasten beispielsweise via Coextrusion in situ hergestellt und auf die anderen Thermoplasten aufgebracht werden. Als andere Thermoplasten können beispielsweise thermoplastische Bisphenol-A-Homopolycarbonate dienen.

Die erfindungsgemäßen Polycarbonatformkörper finden technische Verwendung im Außenbereich, etwa als wärmedämmende Verscheibung, z.B. für Gewächshäuser, Industriebauten, Sporthallen und Schwimmhallen bzw. als Tribünendachbelag oder Wartehausverkleidung, oder als witterungsbeständige Abdeckfolien.

Zur praxisnahen Prüfung der erfindungsgemäßen Polycarbonatformkörper wurde ein an Stegmehrfachplatten (z.B. gemäß EP-OS 0 054 856) in Anlehnung an DIN 53443 entwickelter, modifizierter Kugelfallversuch durchgeführt, bei dem ein Durchstoßkörper von 5 mm Durchmesser ähnliche biaxiale Beanspruchungen hervorrufen soll wie ein herabfallendes Hagelkorn. Bei Raumtemperatur schlägt eine Fallmasse von 36 kg aus 0,2 m Fallhöhe auf die Probekörper, die auf einem Auflagering von 20 mm Innendurchmesser frei aufliegen. Der Durchstoß mit dem Fallbolzen erfolgt genau mittig zwischen den Stegen der Platte. Dabei wird die im Praxisfall außen befindliche, der Witterung ausgesetzte Seite (= der oberste Gurt der Stegmehrfachplatte) in Druckzone geprüft.

Das Bruchbild wird durch Zahlen (1 = Sprödbruch, 2 = glatter Durchriß, 3 = Zäh-Spröd-Bruch, 4 = Zähbruch) charakterisiert.

Als Maß der Zähigkeit wird die Schädigungsarbeit $W_S$ aus der Fallkraft und der Beultiefe errechnet.

Die Erfindung wird durch die nachfolgenden Beispiele veranschaulicht. Zu Vergleichszwecken wurden stets Platten gleicher Dimensionen, also gleicher Platten-, Steg- und Gurtdicke bei gleichem Stegabstand, extrudiert.

Die Bestimmung des Siloxangehaltes, d.h. des Anteils der Dimethylsiloxy-Einheiten in Gew.-%, bezogen auf das Gesamtgewicht des Blockcopolymeren, erfolgte gravimetrisch und durch Kernresonanzspektrometrie. Als mittlere Siloxanblocklänge wird der durch Bestimmung der Endgruppen an Siloxan-Prepolymer ermittelte Polymerisationsgrad $\bar{P}_n$ angegeben.

Beispiel 1

Es wurden folgende Polymere zu Stegdoppelplatten (Länge 2 m, Breite 20 cm) von 10 mm Dicke mit einer Gurtdicke von 0,8 mm, Stegdicke 0,5 mm und Stegabstand 10 mm extrudiert:

1. Ein mit 0,3 mol-% Isatinbiskresol verzweigtes Polycarbonat auf Basis Bisphenol A mit einer relativen Lösungsviskosität von 1,32, gemessen in Dichlormethan bei 25°C und einer Konzentration von 0,5 Gew.-%, das zusätzlich 0,3 Gew.-% 2-(2'-Hydroxy-3'-tert.-butyl-5'-sec.-butyl-phenyl)-2H-benzotriazol enthielt.

2. Ein Copolycarbonat auf Basis von Bisphenol A und 5,5 Gew.-% Polydimethylsiloxan der Blocklänge 40, mit einer relativen Lösungsviskosität von 1,29.

3. Das Copolycarbonat 2., das zusätzlich 0,3 Gew.-% 2-(2'-Hydroxy-3'-tert.-butyl-5'-sec.-butylphenyl)-2H-benzotriazol enthielt.

Die Bewitterung von Plattenabschnitten erfolgte in einem Weatherometer mit künstlichem Regen und Sonnenlichtsimulation durch eine Xenon-Lampe.

| Platte | 0*) | 1. | 2. | 3. |
|---|---|---|---|---|
| 0 h (Ausgangszustand) | | | | |
| Schädigungsarbeit (J) | | 3,01 | 2,95 | 2,96 |
| Bruchbild | | 4 | 4 | 4 |
| 1000 h | | | | |
| Schädigungsarbeit (J) | | 0,10 | 0,96 | 2,28 |
| Bruchbild | | 1 | 2x4/4x3 | 4 |
| 2000 h | | | | |
| Schädigungsarbeit (J) | | 0,14 | 1,09 | 1,80 |
| Bruchbild | | 1 | 4x4/2x3 | 4 |
| 3000 h | | | | |
| Schädigungsarbeit (J) | | 0,11 | 0,88 | 1,77 |
| Bruchbild | | 1 | 1x4/6x3 | 5x4/1x3 |

*) Null-Versuch entspricht Polycarbonat 1 ohne UV-Absorbergehalt. Die Werte werden nachgereicht.

Patentansprüche

1. UV-stabilisierte Polycarbonatformkörper einer Dicke von 0,01 mm bis 1,2 mm aus thermoplastischen Polydiorganosiloxan-Polycarbonat-Blockcopolymeren mit einem mittleren Gewichtsmittelmolekulargewicht ($\bar{M}w$) von 10.000 bis 200.000 bestehend aus

A) 85 Gew.-% bis 99,5 Gew.-%, bezogen auf A) + B), an aromatischen Carbonatstruktureinheiten (I)

$$[-O-D-O-\underset{\underset{O}{\|}}{C}-] \qquad (I)$$

worin -O-D-O- ein Diphenolatrest ist, und aus

B) 15 Gew.-% bis 0,5 Gew.-%, bezogen auf A) + B), an Polydiorganosiloxanstruktureinheiten (II)

$$[-O-D-O-(\underset{\underset{R}{|}}{\overset{\overset{R}{|}}{Si}}-O)_n-D-O-\underset{\underset{O}{\|}}{C}-] \qquad (II)$$

worin die R's gleich oder verschieden sind und lineares $C_1$-$C_{20}$-Alkyl, verzweigtes $C_3$-$C_{20}$-Alkyl, halogeniertes, lineares $C_1$-$C_{20}$-Alkyl, halogeniertes, verzweigtes $C_3$-$C_{20}$-Alkyl, $C_6$-$C_{20}$-Aryl und halogeniertes $C_6$-$C_{20}$-Aryl ist, n eine ganze Zahl zwischen 5 und 100 ist und D die für Struktureinheit (I) genannte Bedeutung hat, und

C) Struktureinheiten von Kettenabbrechern und gegebenenfalls von Verzweigern,

dadurch gekennzeichnet, daß sie einen UV-Absorber enthalten.

2. Polycarbonatformkörper gemäß Anspruch 1, dadurch gekennzeichnet, daß sie den UV-Absorber in Mengen von 0,05 Gew.-% bis 1,0 Gew.-% enthalten.

3. Polycarbonatformkörper gemäß Ansprüche 1 und 2, dadurch gekennzeichnet, daß sie Hohlkammerplatten oder Stegmehrfachplatten mit einer Gurtdicke bzw. Stegdicke von 0,3 mm bis 1,2 mm sind.

4. Polycarbonatformkörper gemäß Ansprüche 1 und 2, dadurch gekennzeichnet, daß sie Folien einer Dicke von 0,01 mm bis 0,3 mm sind.

Europäisches Patentamt

# EUROPÄISCHER RECHERCHENBERICHT

0162245

Nummer der Anmeldung

EP 85 10 3949

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A,D | WO-A-8 000 084 (GENERAL ELECTRIC)<br>* Anspruch 1; Seite 6, Abschnitt 2 *<br>--- | 1 | C 08 L 83/10<br>C 08 L 69/00 |
| A | US-A-3 367 958 (R.B. KIRKENDALL)<br>* Anspruch 1 *<br>--- | 1 | |
| A | JOURNAL OF APPLIED POLYMER SCIENCE, Band 20, Nr. 12, Dezember 1976, Seiten 3275-3293; R.P. KAMBOUR et al.: "Tough, transparent heat- and flame-resistant thermoplastics via silicone block-modified bisphenol fluorenone polycarbonate"<br>* "Synopsis" *<br>----- | 1 | RECHERCHIERTE SACHGEBIETE (Int. Cl.4)<br>C 08 L<br>C 08 G |

Der vorliegende Recherchenbericht wurde für alle Patentansprüche erstellt

| Recherchenort | Abschlußdatum der Recherche | Prüfer |
|---|---|---|
| DEN HAAG | 05-10-1984 | DEPIJPER R.D.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument